# EUROPEAN PATENT APPLICATION

(11) **EP 4 528 643 A1**
(43) Date of publication of application: **26.03.2025**
(21) Application number: 23198842.9
(22) Date of filing: 21.09.2023
(51) Int. Cl.: G06T 7/73, G06T 7/80

(54) **APPARATUS FOR AN OPTICAL IMAGING SYSTEM, OPTICAL IMAGING SYSTEM, METHOD AND COMPUTER PROGRAM**

(71) Applicant: Leica Instruments (Singapore) Pte. Ltd., 608924 Singapore (SG)
(72) Inventor: RAO, Varuna, 608924 Singapore (SG)
(74) Representative: 2SPL Patentanwälte PartG mbB

(57) **Abstract**

Examples provide an apparatus for an optical imaging system comprising one or more processors and one or more storage devices. The apparatus is configured to obtain first sensor data of a first sensor of the optical imaging system. The first sensor data is indicative of a first view of a sample through a microscope of the optical imaging system at a first wavelength range. Further, the apparatus is configured to obtain second sensor data of a second sensor of the optical imaging system. The second sensor data is indicative of a second view of the sample through the microscope of the optical imaging system at a second wavelength range. The apparatus is configured to align the first view and the second view and to generate, based on the alignment of the first view and second view, merge data indicative of a merged view of the sample.

## Description

### Technical field

Examples relate to an apparatus for an optical imaging system, such as surgical optical imaging system, an optical imaging system, a method, and a computer program.

### Background

Medical image registration and fusion process has emerged as an effective application to follow up diseases and decide the necessary therapies based on the conditions of a patient. For many of the considerable diagnostic analyses, it is common practice to assess two or more different histological slides or images from one tissue sample. A specific area analysis of two image modalities requires an overlay of the images to distinguish positions in the sample that are organized at a similar coordinate in both images. Currently the overlay is based on manual image registration. Manual image registration is time consuming and prone to human errors. Further, manual image registration needs some sort of skill for an accurate alignment.

Thus, there may be a desire for an improved concept for overlaying images for an optical imaging system.

### Summary

This desire is addressed by the subject-matter of the independent claims.

The concept proposed in the present disclosure is based on the insight, that merge data indicative of a merged view of a sample can be generated based on a first view and a second view of a sample. Aligning the first view and the second view may allow to generate the merge data. By generating the merge data based on aligned first view and second view manual image registration can be omitted. Thus, an overlay of different images can be improved.

Examples provide an apparatus for an optical imaging system comprising one or more processors and one or more storage devices. The apparatus is configured to obtain first sensor data of a first sensor of the optical imaging system. The first sensor data is indicative of a first view of a sample through a microscope of the optical imaging system at a first wavelength range. Further, the apparatus is configured to obtain second sensor data of a second sensor of the optical imaging system. The second sensor data is indicative of a second view of the sample through the microscope of the optical imaging system at a second wavelength range. The apparatus is configured to align the first view and the second view and to generate, based on the alignment of the first view and second view, merge data indicative of a merged view of the sample. Obtaining the first sensor data and the second sensor data may allow to determine information of two different views or images of the sample. For example, the first view may correspond to a first image of the sample and the second view may correspond to a second image of the sample. The first view and the second view may be acquired simultaneously. The first view and the second view may differ by a used wavelength range, e.g., the first wavelength range may be different from the second wavelength range, and/or may differ by a used image acquisition technique, e.g., the first view may be a fluorescence view of the sample and the second view may be a visible light view of the sample. Therefore, the first view and the second view may comprise different information about the sample. Aligning the first view and the second view may allow to combine the different information of the first view and the second view. Thus, generating the merge data may allow to provide a merged view to the user, which comprises the information of the first view and the second view. In this way, an overlay of different images of the sample can be provided to the user. A manual image registration performed by the user can be omitted.

In an example, the apparatus may be configured to obtain further first sensor data of the first sensor of the optical imaging system and/or further second sensor data of the second sensor of the optical imaging system. The further first sensor data is indicative of a further first view of the sample. The further first sensor data may be obtained after the first sensor data, for example. The further second sensor data is indicative of a further second view of the sample. The further second sensor data may be obtained after the second sensor data, for example. The apparatus may be configured to realign the first view and the second view based on the further first sensor data and/or the further second sensor data. Further, the apparatus may be configured to generate second merge data indicative of a second merged view of the sample based on the realignment of the first view and the second view. Obtaining the further first sensor data and/or the further second sensor data may allow to determine a deviation between the first view and the further first view and/or the second view and the further second view. The deviation may be caused by a systematic error during image acquisition of the sample, e.g., during image acquisition of the first view and the further first view. For example, a temperature drift of the optical imaging system during image acquisition of the sample may lead to a deviation between the first view and the further first view. For example, only the first sensor may be affected by the temperature drift of the optical imaging system. Thus, an alignment of the first view and the second view may decrease during operation of the optical imaging system. Generating the second merge data based on the realignment of the first view and the second view may allow to compensate the deviation between the first view and the further first view. In this way, a systematic error, such as a temperature drift of the optical imaging system, can be considered for generating the second merge data. Therefore, a misalignment which may occur during operation of the optical imaging system can be corrected by realigning the first view and the second view based on the further first sensor data and/or the further second sensor data.

In an example, the merge data and/or the second merge data may be indicative of an alignment error. The apparatus may be configured to trigger an output to an output device for informing a user about the alignment error. Informing the user about the alignment error may increase an awareness of the user about problems caused by usage of the merged view and/or the second merged view. For example, the alignment error may indicate a deviation between the first view and the second view, which may result in a perceptible blurriness of the merged view and/or the second merged view. The perceptible blurriness may decrease the user experience. Thus, the user may decide to use solely the first view or the second view and not the first/second merged view of the sample.

In an example, the apparatus may be configured to obtain trigger data indicative of a change of the optical imaging system and/or a change of the environment of the optical imaging system. Further, the apparatus may be configured to determine, based on the trigger data, if a generation of the second merge data is needed and to generate the second merge data based on the determined need. Obtaining the trigger data may allow an actual need to realign the first view and the second view to be determined. For example, a temperature drift and/or a vibration or a shock of the first/second sensor may cause a need to generate the second merge data. Thus, the second merge data can be generated only if an actual need is determined.

In an example, the merge data and/or the second merge data may be generated periodically. Generating the second merge data periodically may allow to compensate for changes of the environment without obtaining the trigger data. For example, an effect of a temperature drift of the environment of the optical imaging system on the alignment of the first view and the second view can be compensated by periodically generating the second merge data.

In an example, the apparatus may be configured to obtain third sensor data of a third sensor of the optical imaging system. The third sensor data is indicative of a third view of the sample at a third wavelength range. Further, the apparatus may be configured to align the third view, the first view and the second view and generate the merge data based on the alignment of the third view, the first view and the second view. The third view may be different from the first view and the second view. For example, the first view and the second view may be visible light views of the sample for different wavelength ranges and the third view may be a fluorescence view of the sample. This may allow information from three different views of the sample to be combined in the merge data.

In an example, the apparatus may be configured to align the first view and the second view based on keypoint detection and matching of the detected keypoints. Keypoint detection may allow to generate the merge data in a facilitated way.

In an example, the apparatus may be configured to align the first view and the second view based on grayscale conversion and/or histogram enhancement. The grayscale conversion and/or the histogram enhancement may be a pre-processing for keypoint detection. This may allow to improve the generation of the merge data based on the keypoint detection.

In an example, the apparatus may be configured to align the first view and the second view by rotating, scaling and/or translating the first view with respect to the second view. In this way, the merge data can be generated in a facilitated way.

In an example, the first view may be a fluorescence view of the sample and the second view may be a visible light view of the sample. Thus, views of the sample acquired using different techniques can be combined in the merge data. This may allow to provide a user of the optical imaging system a merged view comprising information from fluorescence image acquisition and visible light image acquisition.

Embodiments provide an optical imaging system comprising an apparatus as described above.

Embodiments provide a method for an optical imaging system. The method comprises obtaining first sensor data of a first sensor of the optical imaging system. The first sensor data is indicative of a first view of a sample through a microscope of the optical imaging system at a first wavelength range. Further, the method comprises obtaining second sensor data of a second sensor of the optical imaging system. The second sensor data is indicative of a second view of the sample through the microscope of the optical imaging system at a second wavelength range. Further, the method comprises aligning the first view and the second view and generating merge data, based on the alignment of the first view and the second view, indicative of a merged view of the sample.

In an example, the first sensor data and the second sensor data may be obtained by image acquisition of the sample during an examination of the sample. Image acquisition of the sample during the examination of the sample may allow to determine the first view and the second view for a current measurement setup. This may allow to perform a realignment without change of the measurement setup when needed.

In an example, the first sensor data and the second sensor data may be obtained by image acquisition of the sample during an examination of the calibration target. The examination of the calibration target may allow to determine a predefined structure for the alignment of the first view and the second view. In this way, an accuracy and/or reliability of the alignment of the first and second view can be improved.

Various examples of the present disclosure relate to a corresponding computer program with a program code for performing the above method when the computer program is executed on a processor.

### Short description of the Figures

Some examples of apparatuses and/or methods will be described in the following by way of example only, and with reference to the accompanying figures, in which
Figs. 1a and 1b show schematic diagrams of examples of a system for an optical imaging system and of a corresponding optical imaging system;
Fig. 2 shows a block diagram of an example of a method;
Figs. 3a-3c show user interfaces for video registration;
Figs. 4a-4b show an illustration of a proof-of-principle;
Fig. 5 shows a flow chart of an example of a method for an optical imaging system; and
Fig. 6 shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

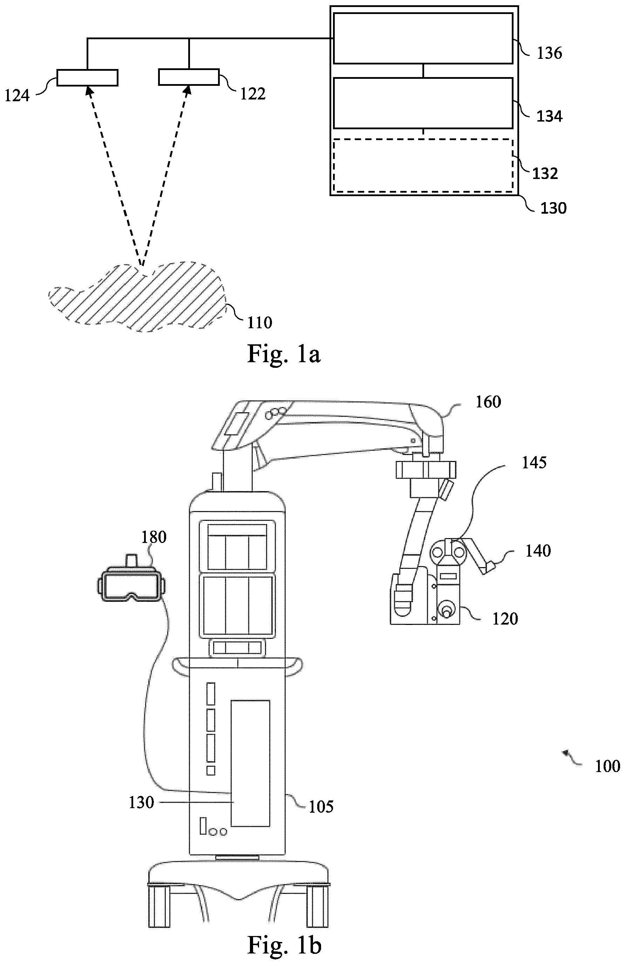

Figs. 1a and 1b show schematic diagrams of an example of an apparatus 130 for an optical imaging system 100 and of a corresponding optical imaging system 100 comprising the apparatus 130. The apparatus 130 is tasked with controlling various aspects of a microscope 120 of the optical imaging system 100, which may be a surgical optical imaging system, and of the entire optical imaging system 100 and/or with processing various types of sensor data of the optical imaging system 100. Consequently, the apparatus 130 may be implemented as a computer system, which interfaces with the various components of the optical imaging system, e.g., the first sensor 122 and the second sensor 124.

The apparatus 130 comprises, as shown in Fig. 1a, one or more processors 134 and one or more storage devices 136. Optionally, the apparatus 130 further comprises one or more interfaces 132. The one or more processors 134 are coupled to the one or more storage devices 136 and to the optional one or more interfaces 132. In general, the functionality of the apparatus 130 may be provided by the one or more processors 134 (e.g., for generating the merge data), in conjunction with the one or more interfaces 132 (for exchanging information, e.g., with the first sensor 122 and/or the second sensor 124) and/or with the one or more storage devices 136 (for storing and/or retrieving information).

The apparatus 130 is configured to obtain first sensor data of a first sensor 122 (i.e., a first optical imaging sensor) of the optical imaging system 100. The first sensor data is indicative of a first view of a sample 110 through a microscope 120 of the optical imaging system 100 at a first wavelength range.

The first sensor data may be obtained by receiving (the first sensor data) from the first sensor 122 or a storage device, such like a frame buffer. For example, the first sensor data may be raw data. That is the apparatus 130 may post process the first sensor data to determine the first view of the sample. Alternatively, the first sensor data may be post processed external to the apparatus 130, e.g., by the first sensor 122. Additionally or alternatively, the first sensor 122 may be part of the apparatus 130 and the apparatus 130 may be configured to determine the first sensor data. For example, the apparatus 130 may control the first sensor 122 to determine the first sensor data.

The first wavelength range may comprise only a single wavelength. Alternatively, the first wavelength range may comprise multiple wavelengths. For example, the first wavelength range may correspond to at least one typical wavelength range for the detection of red, green, and blue light in an RGB sensor. The typical wavelength ranges of an RGB sensor may be red with approximately 620 to 750 nm, green with approximately 495 to 570 nm and blue with approximately 450 to 495 nm. Additionally or alternatively, the first wavelength range may correspond to none-visible light ranges, such like near infrared 700 to 1100 nm or ultraviolet 10 to 400 nm, for example.

Further, the apparatus 130 is configured to obtain second sensor data of a second sensor 124 (i.e., a second optical imaging sensor) of the optical imaging system 100. The second sensor data is indicative of a second view of the sample through the microscope of the optical imaging system at a second wavelength range.

The second sensor data may be obtained by receiving (the second sensor data) from the second sensor 124 or a storage device, such like a frame buffer. For example, the second sensor data may be raw data. That is the apparatus 130 may post process the second sensor data to determine the second view of the sample. Alternatively, the second sensor data may be post processed external to the apparatus 130, e.g., by the second sensor 124. Additionally or alternatively, the second sensor 124 may be part of the apparatus 130 and the apparatus 130 may be configured to determine the second sensor data. For example, the apparatus 130 may control the second sensor 124 to determine the second sensor data.

The second wavelength range may comprise only a single wavelength. Alternatively, the second wavelength range may comprise multiple wavelengths. For example, the second wavelength range may correspond to at least one typical wavelength range for the detection of red, green, and blue light in an RGB sensor. Additionally or alternatively, the second wavelength range may correspond to none-visible light ranges, such like near infrared 700 to 1100 nm or ultraviolet 10 to 400 nm, for example.

If the first view is a visible light view and the second view is also a visible light view, the first wavelength range is different from the second wavelength range. For example, the first wavelength range may comprise red with approximately 620 to 750 nm and green with approximately 495 to 570 and the second wavelength range may comprise green with approximately 495 to 570 nm and blue with approximately 450 to 495 nm. Thus, different information about the sample 110 can be acquired by use of different for different wavelengths ranges.

Alternatively, if the first view and the second view are a fluorescence view and a visible light view, the first wavelength range may also be identical to the second wavelength range. Thus, different information about the sample 110 can be acquired by use of different image techniques. Alternatively, the first wavelength range may be different from the second wavelength range even for a fluorescence view and a visible light view. That is, different image techniques and different wavelength ranges can be combined, for example.

The first sensor and the second sensor may be part of one sensor, e.g., a sensor array. For example, a sensor array may comprise a color filter array or a color filter mosaic. The color filter array or the color filter mosaic may be a mosaic of tiny color filters placed over the first sensor and the second sensor (e.g., corresponding pixel sensors of the sensor array) to acquire color information. Thus, the first view and the second view can be obtained by only one optical imaging sensor.

Alternatively, the first sensor and the second sensor may be different optical imaging sensors, e.g., different RGB sensors or an RGB sensor and a fluorescence image sensor. For example, the RGB sensor and the fluorescence image sensor may be arranged along the optical path of the optical imaging system 100. The wavelength range of a fluorescence image sensor is generally smaller than that of an RGB image sensor. Additionally or alternatively, a prism may be arranged along the optical path of the optical imaging system 100. The prism may deflect light of different wavelengths in different directions. Thus, the prism can be used to deflect light of the first wavelength range to a first RGB sensor and light of the second wavelength range to a second RBG sensor. In this way, different optical imaging sensors can be used to obtain the first sensor data and the second sensor data.

The first view and/or second view may be a visible light view, the fluorescence view, and provide field view, a dark-field view and/or a face contrast view, for example. The first view and the second view may be acquired using the same image acquisition technique or a different image acquisition technique. The first view and the second view may be acquired using the same wavelength range or different wavelength ranges. That is, the first view and second view different channels of the optical imaging system 100. The different channels may be different imaging modalities and/or imaging acquisition techniques.

Combining the first view and the second view with different information may allow to generate an output view (e.g., the merged view of the sample 110) with improved information content. However, combining the first view and the second view to an output view is typically done with manual image registration. Manual image registration is a process in image processing and computer vision where two or more images are aligned or matched manually by a human operator. The goal of image registration is to bring multiple images into a common coordinate system so that they can be compared, overlaid, or fused to extract meaningful information or perform further analysis.

Manual image registration is being subjective and lacks a metric to measure the accuracy of the alignment. Multiple parameters need to be tuned to come to single sweet spot for the alignment. It is a finding of the inventors that the manual image registration can be omitted by aligning the first view and the second view by the apparatus 130. The alignment of the first view and the second view by the apparatus 130 may increase a repeatability, an accuracy or precision and/or may be quantitative rather than subjective.

Thus, the apparatus 130 is configured to align the first view and the second view. Image alignment may involve finding the transformation that brings two or more images (the first view and second view) into a common coordinate system. For example, the apparatus 130 may use feature-based methods such like keypoint-based techniques (such like keypoint detection and matching), Random Sample Consensus, intensity-based methods, optical flow and/or phase correlation for aligning the first view and the second view.

Further, the apparatus 130 is configured to generate, based on the alignment of the first view and second view, merge data indicative of a merged view of the sample 110. The apparatus 130 may be configured to generate the image data for displaying to a user. For example, the merge data may be transmitted to a display device 180 or a storage device, such like a frame buffer. Additionally or alternatively, the apparatus 130 may comprise a display device and may control the display device to display the merged view.

Generating the merge data may allow to omit manual image registration. This may allow to safe effort and time of a user of the optical imaging system 100. The apparatus 130 can provide an automatic registration utility, e.g., in augmented reality microscope. This may facilitate an enhanced visualization of the sample 110, e.g., to a surgeon at a time of surgery because of high accuracy of image alignment.

For example, the first view and the second view can be a live view of the sample 110. Live view refers to a real-time display of the sample 110. For example, a live view may allow the user to see a continuous and up-to-date display of the sample 110 being acquired by the microscope 120. Thus, the apparatus 130 can be utilized to align a first live view (e.g., the first view) and a second live view (e.g., the second view). Alternatively, only the first view or the second view may be a live view. Thus, the apparatus 130 may align a first live view (e.g., the first view) with a second none-live view (i.e., a static view of the sample 110, e.g., the second view).

For example, the apparatus 130 may be used to align parameters of different life images. The first view may be a first live image and the second view may be a second life image. The apparatus 130 may align the first live image and the second live image. For example, alignment parameters can be utilized for different life images. In this way, post processing of captured images can be omitted.

The proposed concept may be built around two main components - the microscope 120, which comprises the optical components used to view the sample 110, and the apparatus 130, which may be used to control the optical imaging system 100, process sensor data of the microscope 120, e.g., the first sensor 122, and/or to generate the merged data.

In general, a microscope, such as the microscope 120, is an optical instrument that is suitable for examining objects that are too small to be examined by the human eye (alone). For example, a microscope 120 may provide an optical magnification of a sample, such as the sample 110 shown in Fig. 1a. In modern microscopes, the optical magnification is often provided for a camera or an imaging sensor, such as the first sensor 122 of the microscope 120.

There are a variety of different types of optical imaging systems. If the optical imaging system 100 is used in the medical or biological fields, the sample 110 may be a sample of organic tissue, e.g., arranged within a petri dish or present in a part of a body of a patient. In some examples of the present disclosure, e.g., as shown in Fig. 1b, the optical imaging system 100 may be a surgical optical imaging system, e.g., an optical imaging system that is to be used during a surgical procedure, such as an oncological surgical procedure or during tumor surgery. However, the proposed concept may also be applied to other types of microscopy, e.g., microscopy in a laboratory or microscopy for the purpose of material inspection.

As is evident, the optical imaging system 100 comprises a number of components, such as the apparatus 130, the microscope 120 with the at least one optical imaging sensors 122, an optional main pair of ocular displays 140, an optional secondary pair of ocular displays 145 and a head-mounted display 180. In the configuration shown in Fig. 1a, the microscope 120 may be a stereoscopic microscope 120 with a single pair of optical imaging sensors 122, 124 for visible light imaging. However, other implementations are possible, e.g., a pair of optical imaging sensors for visible light and fluorescence imaging, or four optical imaging sensors for both visible light (reflectance) imaging and fluorescence imaging, two optical imaging sensors for providing the two stereo channels for visible light imaging and two optical imaging sensors for providing the two stereo channels for fluorescence imaging.

Fig. 1b shows a schematic diagram of an example of a surgical optical imaging system 100 comprising the microscope 120 and the apparatus 130. In general, a (surgical) optical imaging system is a system that comprises a microscope 120 and additional components, which are operated together with the microscope 120. In other words, a (surgical) optical imaging system is a system that comprises the microscope 120 and one or more additional components, such as the apparatus 130 (which may be a computer system being adapted to control the microscope 120 and, for example, generate the merge data), an illumination system (which is used to illuminate a sample 110 being imaged by the microscope 120), additional sensors, displays etc.

The surgical optical imaging system 100 shown in Fig. 1b comprises a number of optional components, such as a base unit 105 (which may comprise the apparatus 130) with a stand, ocular displays 140; 145 that are arranged at the microscope 120, a head-mounted display 180, and a (robotic or manual) arm 160 which holds the microscope 120 in place, and which is coupled to the base unit 105 and to the microscope 120. In general, these optional and nonoptional components may be coupled to the apparatus 130, which may be configured to control and/or interact with the respective components, e.g., to trigger an output for informing the user about the alignment error.

In an example, the apparatus 130 may be configured to obtain further first sensor data of the first sensor 122 of the optical imaging system 100 and/or further second sensor data of the second sensor 124 of the optical imaging system 100. The further first sensor data is indicative of a further first view of the sample 110.

For example, the further first sensor data may be acquired during image acquisition of the sample 110. For example, the first sensor data and the further first sensor data may be part of a live view of the sample 110 acquired by the first sensor 122. That is, the further first view of the sample 110 may be a frame of the live view at a later time than the first view. The further first sensor data may be obtained by the device 130 in the same manner as described above for the first sensor data.

The further second sensor data is indicative of a further second view of the sample. For example, the further second sensor data may be acquired during image acquisition of the sample 110. For example, the second sensor data and the further second sensor data may be part of a live view of the sample 110 acquired by the second sensor 122. That is, the further second view of the sample 110 may be a frame of the live view at a later time than the second view. The further second sensor data may be obtained by the apparatus 130 in the same manner as described above for the second sensor data.

For example, the first sensor data and the further first sensor data and/or the second sensor data and the further second sensor data may be received simultaneously, e.g., by receiving a sensor signal from a frame buffer or the first sensor 122 and the second sensor 124. The sensor signal may comprise the first sensor data and the further first sensor data and/or the second sensor data and the further second sensor data. Alternatively, the further first sensor data may be obtained after the first sensor data and/or the further second sensor data may be obtained after the second sensor data.

The apparatus 130 may be configured to realign the first view and the second view based on the further first sensor data and/or the further second sensor data. For example, image acquisition of the first sensor 122 may be affected by an external event, such like a shock of the optical imaging system 100. The shock may cause, for example, a displacement of the first sensor 122, which may affect the alignment between the first view and the second view. By obtaining the further first sensor data the apparatus 130 can determine the deviation between the first view and the further first view. The determined deviation can be used to generate second merge data.

Alternatively, the apparatus 130 may be configured to align the further first view and the further second view based on the further first sensor data and/or the further second sensor data. For example, the alignment of the further first view and the further second view can be performed in the same manner as described above and/or below for the alignment of the first view and the second view. In this case, the realignment of the first view and the second view may be performed by aligning the further first view and further second view.

Thus, the apparatus 130 may be configured to generate second merge data indicative of a second merged view of the sample 110 based on the realignment of the first view and the second view. In this way, the second merged view can be compensated for changes in the optical imaging system 100, e.g., during image acquisition of the sample 110. This compensation can be performed by the apparatus 130 based on a trigger event, a user input and/or an elapsed time, for example. In this way, it can be ensured that an alignment of the first view and the second view is correct.

In an example, the merge data and/or second merge data may be indicative of an alignment error. The apparatus 130 may be configured to trigger an output to an output device for informing a user about the alignment error. The apparatus 130 may determine the alignment error, e.g., during generation of the second merge data. For example, the apparatus 130 may determine the alignment error based on a deviation between the first view and the further first view and/or the second view and the further second view. By determining the alignment error, the apparatus 130 may trigger informing the user of the misalignment. Thus, the user of the optical imaging system 100 can be informed about an uncertainty of the alignment of the first view and the second view. In this way, the user can take certain counter measures, e.g., can switch form the merged view/second merged view to the first view or the second view.

In an example, the apparatus 130 may be configured to obtain trigger data indicative of a change of the optical imaging system and/or a change of the environment of the optical imaging system. Further, the apparatus 130 may be configured to determine, based on the trigger data, if a generation of the second merge data is needed and to generate the second merge data based on the determined need. The trigger data may be received from an input device and/or a sensor, e.g. a sensor of the optical imaging system. Additionally or alternatively, the trigger data may be measured by the apparatus 130. For example, the apparatus 130 may comprise a temperature sensor to measure the temperature of the environment of the optical imaging system and/or a component of the optical imaging system.

For example, the trigger data may comprise a temperature information about an environment of the optical imaging system. The apparatus 130 may determine based on the temperature information a change of the temperature of the environment of the optical imaging system. For example, the apparatus may retrieve from a storage device for previous temperature of the environment and may compare the previous temperature of the environment with the temperature information. Alternatively, the trigger data may comprise information about a temperature change in the environment of the optical imaging system. If a temperature threshold, such like 0.5°C, 1°C, 2°C, is exceeded, the apparatus 130 may determine a need to generate the second merge data. Thus, the apparatus can determine the need by comparing the trigger data with a threshold.

Additionally or alternatively, the trigger data may be indicative of an event which may have caused a change of the optical imaging system 100, e.g., a shock. For example, a user of the optical imaging system 100 may have accidentally shocked the optical imaging system 100. That is, a setup of the optical imaging system 100, e.g., the first sensor 122, may have changed due to the shock. For example, an acceleration sensor may have measured the shock of the optical imaging system 100. The acceleration sensor may transmit the trigger data indicative of the shock to the apparatus 130. The apparatus 130 may generate the second merge data due to the trigger event, i.e., the shock.

In an example, the merge data and/or the second merge data may be generated periodically. Generating the second merge data periodically may allow to compensate for changes of the environment without obtaining the trigger data. For example, the temperature of the environment of the optical imaging system 100 may vary over time. To compensate for changes of the setup of the optical imaging system 100 caused by the varying temperature, the apparatus 130 may periodically generate the second merge data. In this way, a reliability of the alignment of the first view and second view can be improved.

In an example, the apparatus 130 may be configured to obtain third sensor data of a third sensor of the optical imaging system. The third sensor data is indicative of a third view of the sample. Further, the apparatus 130 may be configured to align the third view, the first view and the second view and generate the merge data based on the alignment of the third view, the first view and the second view. The third view may be different from the first view and/or the second view. For example, the third wavelength range may be different from the first wavelength range and/or the second wavelength range. For example, the third view may be acquired using an image acquisition technique different from the image acquisition technique used for acquisition of the first view and/or the second view. Using the third view the apparatus may combine information of three different channels to generate the merge data or the second merge data. In this way, different imaging modalities (e.g., wavelength ranges) and/or image acquisition techniques used to visualize specific properties of the sample 110 can be combined. Thus, the user may receive a more comprehensive view of the sample 110, e.g., revealing structural, functional and/or molecular details that would be missed using a single channel.

In an example, the apparatus 130 may be configured to align the first view and the second view based on keypoint detection and matching of the detected keypoints. Keypoint detection is a technique to identify distinctive and informative points or regions in an image, e.g., the first view and the second view. Keypoints are locations in an image that represent salient features, such as corners, edges, or blobs, which are important for image matching, object recognition, image stitching, and/or image registration. Keypoint detection algorithm aims to locate these points in an image and provide a set of coordinates (x, y) for each keypoint. Additionally, some keypoint detectors may also provide additional information, such as the scale and orientation of the keypoint. The presence of scale and orientation information allows keypoint descriptors to be more robust to changes in the size and orientation of the objects being detected. Using keypoint detection may allow to align the first view and the second view in a facilitated way. The apparatus 130 may perform the keypoint detection and the keypoint imaging to use a transformation model for alignment of the first view and the second view. Optionally, once the keypoint matches are obtained, the apparatus 130 may estimate a transformation model (e.g., affine or projective transformation) on the matched keypoints. The transformation model may describe how one image needs to be transformed to align with the other image. Based on the estimated transformation the apparatus 130 may generate the merge data or the second merge data. Alternatively to a transformation model, the apparatus 130 may use direct image registration, for example.

In an example, the apparatus 130 may be configured to align the first view and the second view based on grayscale conversion and/or histogram enhancement. For example, the apparatus 130 may preprocess the first view and or the second view using grayscale conversion and/or histogram enhancement. Grayscale conversion is the process of converting a color image into a grayscale image. By converting an image to grayscale, one enhances the contrast between edges and corners, making these features easier to detect. Thus, the keypoint detection may be improved. Histogram enhancement can be applied before keypoint detection to improve the overall quality of the image. Enhancing the image's contrast and highlighting finer details can aid keypoint detection algorithms in accurately identifying keypoints.

In an example, the apparatus 130 may be configured to align the first view and the second view by rotating, scaling and/or translating the first view with respect to the second view. In this way, the merge data can be generated in a facilitated way. The apparatus 130 can utilize the same algorithms used for image alignment for in image stabilization and/or in auto-focus latency improvement.

In an example, the first view may be a fluorescence view of the sample and the second view may be a visible light view of the sample. Thus, views of the sample 110 acquired using different image acquisition techniques can be combined in the merge data.

As shown in Fig. 1a the optional one or more interfaces 132 is coupled to the respective one or more processors 134 at the apparatus 130. In examples the one or more processors 134 may be implemented using one or more processing units, one or more processing devices, any means for processing, such as a processor, a computer or a programmable hardware component being operable with accordingly adapted software. Similar, the described functions of the one or more processors 134 may as well be implemented in software, which is then executed on one or more programmable hardware components. Such hardware components may comprise a general-purpose processor, a Digital Signal Processor (DSP), a micro-controller, etc. The one or more processors 134 is capable of controlling the one or more interfaces 132, so that any data transfer that occurs over the one or more interfaces 132 and/or any interaction in which the one or more interfaces 132 may be involved may be controlled by the one or more processors 134.

In an embodiment the apparatus 130 may comprise a memory, e.g., the one or more storage devices 136 and at least one or more processors 134 operably coupled to the memory and configured to perform the method described below.

In examples the one or more interfaces 132 may correspond to any means for obtaining, receiving, transmitting or providing analog or digital signals or information, e.g. any connector, contact, pin, register, input port, output port, conductor, lane, etc. which allows providing or obtaining a signal or information. The one or more interfaces 132 may be wireless or wireline and it may be configured to communicate, e.g., transmit or receive signals, information with further internal or external components.

The apparatus 130 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

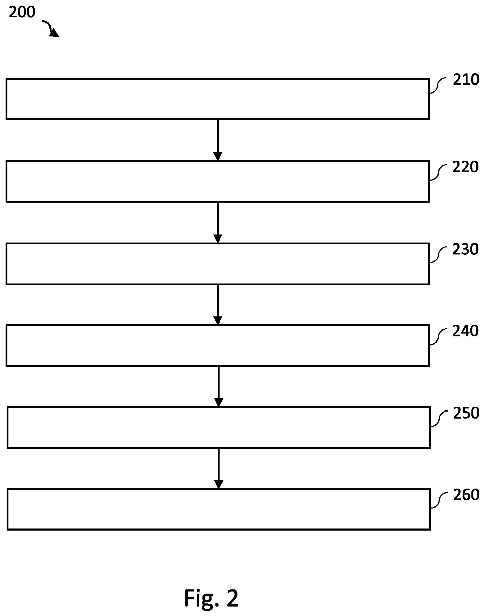

More details and aspects are mentioned in connection with the examples described below. The example shown in Fig. 1 may comprise one or more optional additional features corresponding to one or more aspects mentioned in connection with the proposed concept or one or more examples described below (e.g., Fig. 2 - 6).

Fig. 2 shows a block diagram of an example of a method 200. The block diagram shows different stages of processing of an image for automatic registration (i.e., alignment) of images. The method 200 may be performed by an apparatus as described above, e.g., with reference to Fig. 1.

In 210 an original image may be obtained, e.g., the first view is received from the first sensor. In 220 a grayscale conversion may be performed. Grayscale conversion is the process of converting a color image into a grayscale image, where each pixel's intensity is represented by a single value ranging from black (minimum intensity) to white (maximum intensity). This simplifies the image to shades of gray, removing color information. In a grayscale image, the absence of color allows focusing on the overall brightness and intensity variations in the image, making it suitable for certain image processing tasks like edge detection, feature extraction, and/or keypoint detection, for example.

In 230 histogram enhancement may be performed. Histogram enhancement, also known as histogram equalization, is a process applied to a grayscale image after conversion. It aims to improve the image's contrast and enhance its visual quality by redistributing pixel intensity values across the entire dynamic range. This adjustment may help to make dark regions lighter and light regions darker, leading to a more balanced distribution of pixel values. Histogram enhancement can reveal finer details and improve the visibility of features in the image, making it useful for various image analysis tasks like edge detection, image segmentation, and keypoint detection. The order of 220 and 230 can also be switched.

In 240 a keypoint detection may be performed. Keypoint detection after histogram enhancement involves identifying distinctive and informative points or regions in an image that has undergone contrast improvement through histogram enhancement. This process enhances the visibility of edges, corners, and other features, making it easier for keypoint detection algorithms to accurately identify and locate these important points. The combination of histogram enhancement and keypoint detection enhances the detection of relevant features, improving the effectiveness of subsequent tasks such as image alignment, object recognition, or further image analysis.

In 250 a matching may be performed. Matching after keypoint detection involves comparing and pairing the keypoints identified in two or more images, e.g., the first view and the second view. This comparison aims to establish correspondences between keypoints in different images, often using descriptors that capture the local image information around each keypoint. These matched keypoints represent similar features or structures in the images and are used for tasks like image alignment, object tracking, or recognition. The accuracy and quality of the matching process may directly impact the success of subsequent analysis and manipulation of the images.

In 260 an alignment may be found. For example, the apparatus may determine the merged view and/or the second merged view. Finding an alignment after matching may involve using the matched keypoints to calculate the transformation that aligns one image with another. This transformation could include translation, rotation, scaling, or more complex deformations, depending on the nature of the images and the specific matching algorithm used. The calculated alignment transformation may be applied to one of the images to bring it into alignment with the other image. This aligned pair of images can then be used for tasks like image stitching, super-resolution, or further analysis that requires accurate spatial correspondence between the images. For example, the aligned pair of images can be displayed to the user of the optical imaging system.

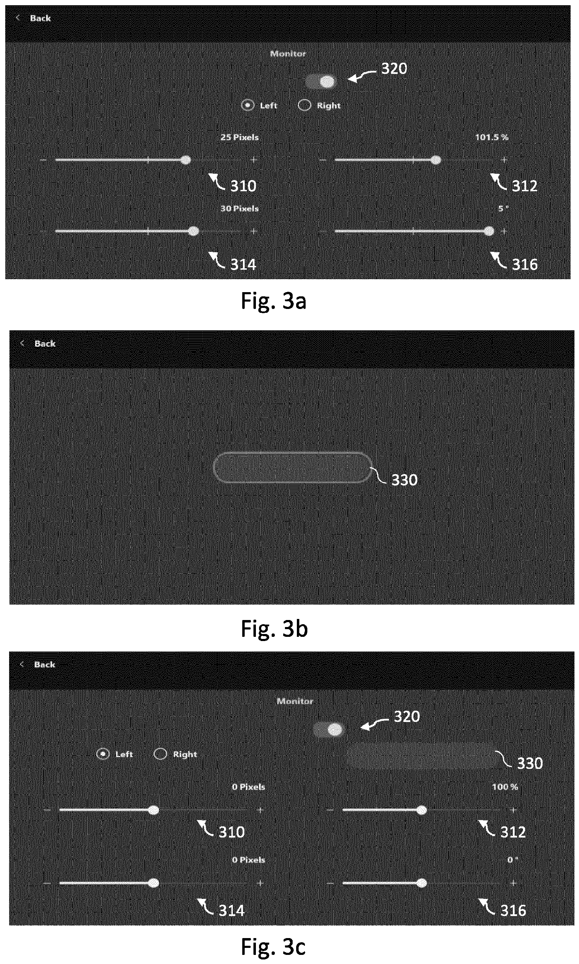

With the features of method 200 a complicated manual registration process can be simplified. For example, an entire manual registration process can be omitted by a click of a button as shown in Fig. 3.

More details and aspects are mentioned in connection with the examples described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 -6).

Figs. 3a-3c show user interfaces for video registration. Fig. 3a shows an example of a user interfaces for a manual video registration. The user may select a left image (e.g., the first view) or a right image (e.g., the second view) for adjusting an orientation of the respective image. For example, the user may adjust the horizontal position 310, the zoom 312, the vertical position 314 and/or the rotation 316.

Further, the user may select a glow mode using a slide button 320. Glow mode may refer to a specific imaging mode used in optical imaging systems. In this mode, the optical imaging system may be configured to detect and visualize faint signals emitted by fluorescent markers or dyes that are often used in biological or medical samples. The term "glow" refers to the subtle light emitted by these markers when they are excited by a specific wavelength of light. Thus, by selecting glow mode using the slide button 320 the user may select different image acquisition techniques to be combined.

As can be seen in Fig. 3a, manual video registration may comprise multiple parameters to tune to come to single sweet spot. Manual video registration can be performed in a glow mode with a test card. In this case, a user may rely on the limited amount of signal the is emitted by the test cards. To improve the manual video registration an apparatus may perform the video registration.

Fig. 3b shows an example of a user interface for video registration performed by an apparatus, e.g., the apparatus as described with reference to Fig. 1. Instead of manually setting multiple parameters the user of the optical imaging system may only select the auto calibrate button 330. In this way, the user may trigger an alignment performed by the apparatus. For example, the user may trigger an alignment of the first view and the second view by clicking on the auto calibration button 330.

Fig 3c shows an example of a hybrid approach of the video registration performed by an apparatus. The user interface of Fig. 3c may be only assessable for a service person. Thus, a service person can adjust the alignment of the first view and the second view provided by the apparatus. For example, the service person may adjust the horizontal position 310, the zoom 312, the vertical position 314 and/or the rotation 316. In this way, a skilled person can adjust the merged view to a personal preference.

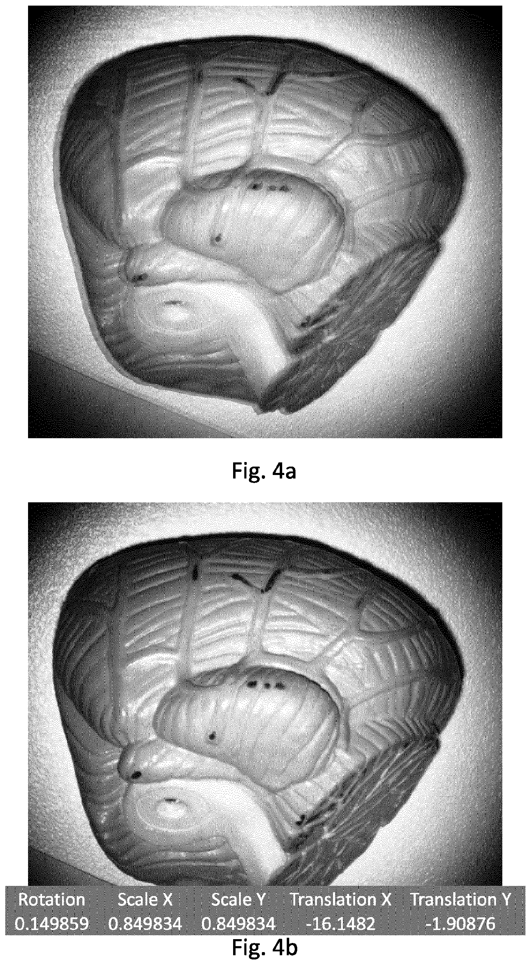

More details and aspects are mentioned in connection with the examples described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 - 6).

Figs. 4a-4b show an illustration of a proof of principle. Fig. 4a shows an overlay of two different images without an alignment. Fig. 4b shows an overlay of the two different images with an alignment performed by an apparatus, e.g., an apparatus as described with reference to Fig. 1. As can be seen Fig. 4b is sharper than Fig. 4a. In this way, a user experience can be increased by the merge data generated by the apparatus. The adjustment parameters of the first image or the second image are shown in Fig. 4b exemplary.

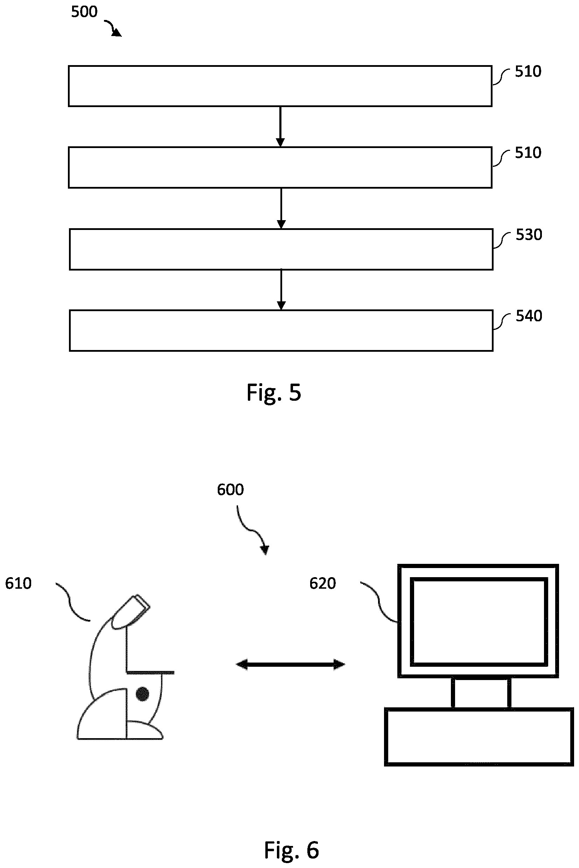

More details and aspects are mentioned in connection with the examples described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5 - 6).

Fig. 5 shows a flow chart of an example of a method 500 for an optical imaging system. The method 500 may be performed by an apparatus as described above, e.g., with reference to Fig. 1. The method 500 comprises obtaining 510 first sensor data of a first sensor of the optical imaging system. The first sensor data is indicative of a first view of a sample through a microscope of the optical imaging system at a first wavelength range. Further, the method 500 comprises obtaining 520 second sensor data of a second sensor of the optical imaging system. The second sensor data is indicative of a second view of the sample through the microscope of the optical imaging system at a second wavelength range. Further, the method 500 comprises aligning 530 the first view and the second view and generating 540 merge data, based on the alignment of the first view and the second view, indicative of a merged view of the sample.

In an example, the first sensor data and the second sensor data may be obtained by image acquisition of the sample during an examination of the sample. Image acquisition of the sample during the examination of the sample may allow to determine the first view and the second view for a current measurement setup. This may allow to perform a realignment without change of the measurement setup when needed.

In an example, the first sensor data and the second sensor data may be obtained by image acquisition of the sample during an examination of the calibration target. The examination of the calibration target may allow to determine a predefined structure for the alignment of the first view and the second view. In this way, an accuracy and/or reliability of the alignment of the first and second view can be improved.

More details and aspects are mentioned in connection with the examples described above and/or below. The example shown in Fig. 5 may comprise one or more optional additional features corresponding to one or more aspects mentioned in connection with the proposed concept or one or more examples described above (e.g., Fig. 1 - 4) and/or below (e.g., Fig. 6).

Some embodiments relate to a microscope comprising an apparatus as described in connection with Fig. 1. Alternatively, a microscope may comprise of or can be communicatively connected to an apparatus as described in connection with Fig. 1. Fig. 6 shows a schematic illustration of a system 600, e.g., an optical imaging system, configured to perform a method described herein, e.g., with reference to Figs. 2 and/or 5. The system 600 comprises a microscope 610 and a computer system 620. The microscope may comprise the apparatus as described above, e.g., with reference to Fig. 1. The microscope 610 is configured to take images and is connected to the computer system 620. The computer system 620 is configured to execute at least a part of a method described herein. The computer system 620 may be configured to execute a machine learning algorithm. The computer system 620 and microscope 610 may be separate entities but can also be integrated together in one common housing. The computer system 620 may be part of a central processing system of the microscope 610 and/or the computer system 620 may be part of a subcomponent of the microscope 610, such as a sensor, an actor, a camera or an illumination unit, etc. of the microscope 610.

The computer system 620 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 620 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

More details and aspects are mentioned in connection with the examples described above. The example shown in Fig. 6 may comprise one or more optional additional features corresponding to one or more aspects mentioned in connection with the proposed concept or one or more examples described above (e.g., Fig. 1 - 5).

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a nontransitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 optical imaging system
105 base
110 sample
120 microscope
122 sensor
130 apparatus
132 interface
134 processor
136 storage device
140, 145 ocular display
160 arm
180 head-mounted display
310 adjust horizontal position
312 adjust zoom
314 adjust vertical position
316 adjust rotation
320 glow mode selection slide button
330 auto calibration button
500 method for an optical imaging system
510 obtaining first sensor data
520 obtaining second sensor data
530 aligning the first view and the second view
540 generating merge data
600 system
610 microscope
620 computer system

## Claims

1. An apparatus (130) for an optical imaging system (100), the optical imaging system (100) comprising one or more processors (134) and one or more storage devices (136), wherein the system is configured to:
obtain first sensor data of a first sensor (122) of the optical imaging system (100), the first sensor data indicative of a first view of a sample through a microscope of the optical imaging system (100) at a first wavelength range;
obtain second sensor data of a second sensor (124) of the optical imaging system (100), the second sensor data indicative of a second view of the sample through the microscope of the optical imaging system (100) at a second wavelength range;
align the first view and the second view; and
generate merge data indicative of a merged view of the sample based on the alignment of the first view and the second view.

2. The apparatus (130) according to claim 1, wherein the apparatus (130) is configured to:
at least one of obtain further first sensor data of the first sensor (122) of the optical imaging system (100), the further first sensor data indicative of a further first view of the sample and
obtain further second sensor data of the second sensor (124) of the optical imaging system (100), the further second sensor data indicative of a further second view of the sample;
realign the first view and the second view based on at least one of the further first sensor data and the further second sensor data; and
generate second merge data indicative of a second merged view of the sample based on the realignment of the first view and the second view.

3. The apparatus (130) according to any one of the preceding claims, wherein
the merge data or second merge data is indicative of an alignment error; and
the apparatus (130) is configured to trigger an output to an output device (145; 150; 180) for informing a user about the alignment error.

4. The apparatus (130) according to claim 2 or 3, wherein the apparatus (130) is configured to:
obtain trigger data indicative of at least one of a change of the optical imaging system (100) or a change of the environment of the optical imaging system (100);
determine, based on the trigger data, whether a generation of the second merge data is needed; and
generate the second merge data based on the determined need.

5. The apparatus (130) according to any one of the preceding claims, wherein
the merge data or second merge data is generated periodically.

6. The apparatus (130) according to any one of the preceding claims, wherein the apparatus (130) is configured to:
obtain third sensor data of a third sensor of the optical imaging system (100), the third sensor data indicative of a third view of the sample at a third wavelength range;
align the third view, the first view and the second view; and
generate the merge data based on the alignment of the third view, the first view and the second view.

7. The apparatus (130) according to any one of the preceding claims, wherein the apparatus (130) is configured to
align the first view and the second view based on keypoint detection and matching of the detected keypoints.

8. The apparatus (130) according to claim 7, wherein the apparatus (130) is configured to align the first view and the second view based on at least one of grayscale conversion or histogram enhancement.

9. The apparatus (130) according to any one of the preceding claims, wherein the apparatus (130) is configured to
align the first view and the second view by at least one of rotating, scaling or translating the first view with respect to the second view.

10. The apparatus (130) according to any one of the preceding claims, wherein
the first view is a fluorescent view of the sample and the second view is a visible light view of the sample.

11. An optical imaging system (100), comprising:
an apparatus (130) according to any one of the preceding claims.

12. A method for an optical imaging system, the method comprising:
obtaining first sensor data of a first sensor of the optical imaging system, the first sensor data indicative of a first view of a sample through a microscope of the optical imaging system at a first wavelength range;
obtaining second sensor data of a second sensor of the optical imaging system, the second sensor data indicative of a second view of the sample through the microscope of the optical imaging system at a second wavelength range;
aligning the first view and the second view; and
generating merge data indicative of a merged view of the sample based on the alignment of the first view and the second view.

13. The method according to claim 12, wherein
the first sensor data and the second sensor data is obtained by image acquisition of the sample during an examination of the sample.

14. The method according to claim 13, further comprising
the first sensor data and the second sensor data is obtained by image acquisition of the sample during an examination of a calibration target.

15. A computer program with a program code for performing the method according to any one of claims 12-14 when the computer program is executed on a processor.
